# DEMANDE DE BREVET EUROPEEN

(11) **EP 2 434 599 A1**
(43) Date de publication de la demande: **28.03.2012**
(21) Numéro de dépôt: 11290393.5
(22) Date de dépôt: 05.09.2011
(51) Int. Cl.: H02G 3/04, A47B 21/06

(54) **Accessoire électrique monté mobile en translation dans une ouverture pratiquée dans une paroi**

(30) Priorité: 27.09.2010 FR 1003810
(71) Demandeur: Legrand France, 87000 Limoges (FR); Legrand SNC, 87000 Limoges (FR)
(72) Inventeur: Jarry, Patrice, 72140 Mont Saint Jean (FR)
(74) Mandataire: Orsini, Fabienne

(57) **Abrégé**

L'invention concerne un accessoire électrique (1) adapté à être monté mobile en translation dans une ouverture traversante (101) d'une paroi (100) entre une position rentrée et une position sortie, et comprenant :
- un corps (10), et
- un couvercle (20) adapté à obturer ladite ouverture traversante lorsque l'accessoire électrique est placé en position rentrée, et qui est monté mobile à pivotement par rapport au corps autour d'un premier axe (A1).

Selon l'invention, le couvercle est également monté mobile à pivotement par rapport au corps autour d'un second axe (A2) dont la direction forme un angle non nul avec la direction dudit premier axe.

## Description

### DOMAINE TECHNIQUE AUQUEL SE RAPPORTE L'INVENTION

La présente invention concerne, de manière générale, le domaine des installations électriques.

Elle concerne plus particulièrement un accessoire électrique adapté à être monté mobile en translation dans une ouverture d'une paroi, entre une position rentrée et une position sortie, cet accessoire électrique comprenant un corps et un couvercle qui est adapté à obturer une ouverture traversante de la paroi lorsque l'accessoire est placé en position rentrée et qui est monté mobile à pivotement par rapport au corps, autour d'un premier axe.

Elle concerne en particulier les blocs multiprises qui sont montés mobiles à translation au travers d'une ouverture pratiquée dans une paroi d'un bureau, et qui sont équipés d'un couvercle permettant, lorsque le bloc multiprise est en position rentrée, d'obturer esthétiquement l'ouverture pratiquée dans la paroi du bureau.

### ARRIERE-PLAN TECHNOLOGIQUE

On connaît notamment du document EP 1 256 288 un accessoire électrique du type précité dans lequel le corps est constitué par un bloc multiprise et dans lequel le couvercle est monté mobile sur le bloc multiprise, pour basculer autour d'un seul axe de pivotement, entre une position d'obturation de l'ouverture et une position inclinée.

Grâce à cette mobilité, l'usager peut incliner le couvercle pour le saisir par sa tranche afin de pouvoir extraire le bloc multiprise et le manoeuvrer depuis sa position rentrée vers sa position sortie. L'usager peut ainsi avoir accès aux prises de courant du bloc multiprise pour y brancher une fiche électrique d'un appareil électrique quelconque.

Une fois le branchement de l'appareil électrique réalisé, l'usager peut, si les dimensions de cette fiche électrique le permettent, redescendre le bloc multiprise jusqu'à sa position rentrée. Une fois dans cette position, le couvercle se rabat dans une position légèrement inclinée qui permet aux conducteurs électriques de passer au travers de l'ouverture.

L'inconvénient majeur d'un tel accessoire électrique est qu'il est difficile d'identifier la zone du couvercle sur laquelle l'usager doit appuyer pour le faire basculer. En effet, lorsque le couvercle est en position d'obturation, il est affleurant à la paroi du bureau, ce qui ne permet pas de présumer de la position du premier axe de pivotement du couvercle.

Un second inconvénient de cet accessoire électrique est que le basculement du couvercle autour de cet unique axe de pivotement n'autorise la sortie des conducteurs électriques que suivant une direction privilégiée, orthogonale à cet axe. De ce fait, pour brancher l'appareil électrique au bloc multiprise, l'usager est contraint de courber les conducteurs électriques de manière à les diriger selon cette direction privilégiée.

Un troisième inconvénient de l'accessoire électrique est que, lorsque les conducteurs électriques qui passent au travers de l'ouverture s'écartent de cette direction privilégiée, ils risquent de se bloquer dans les coins formés entre le couvercle et le bord de l'ouverture. Ce blocage risque en outre de créer un écrasement des conducteurs électriques, au détriment de leur longévité.

### OBJET DE L'INVENTION

Afin de remédier aux inconvénients précités de l'état de la technique, la présente invention propose un nouvel accessoire électrique d'utilisation plus intuitive et générant moins de contraintes sur les conducteurs électriques.

Plus particulièrement, on propose selon l'invention un accessoire électrique tel que défini dans la revendication 1.

Ainsi, grâce à cette nouvelle mobilité du couvercle, celui-ci peut basculer autour d'une pluralité d'axes distincts, issus de la combinaison des premier et second axes.

De cette manière, quelle que soit la zone de la périphérie du couvercle sur laquelle l'usager appuie, le couvercle bascule, ce qui facilite sa saisie.

En outre, puisque le couvercle peut basculer autour d'une pluralité d'axes, les conducteurs électriques peuvent sortir de l'ouverture avec une orientation quelconque, ce qui réduit les contraintes exercées sur les conducteurs électriques.

D'autres caractéristiques non limitatives et avantageuses de l'accessoire électrique selon l'invention sont énoncées dans les revendications 2 à 14.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés:
- la figure 1 est une vue schématique en perspective partiellement coupée d'un accessoire électrique selon l'invention, qui est engagé dans une ouverture pratiquée dans une paroi d'un bureau, qui est en position rentrée dans cette ouverture, et dont le couvercle est en position droite ;
- la figure 2 est une vue de détail de la zone II de la figure 1 ;
- la figure 3 est une vue homologue à celle de la figure 2, sur laquelle seule une partie inférieure du couvercle a été représentée ;
- la figure 4 est une vue schématique en perspective partiellement coupée de l'accessoire électrique de la figure 1, sur laquelle l'accessoire électrique est en position rentrée et son couvercle est en position inclinée ;
- la figure 5 est une vue schématique en perspective partiellement coupée de l'accessoire électrique de la figure 1, sur laquelle l'accessoire électrique est en position sortie et son couvercle est en position inclinée ;
- la figure 6 est une vue schématique en perspective de l'accessoire électrique de la figure 1, sur laquelle l'accessoire électrique est en position rentrée et son couvercle est en position intermédiaire, en appui contre un câble d'alimentation électrique.

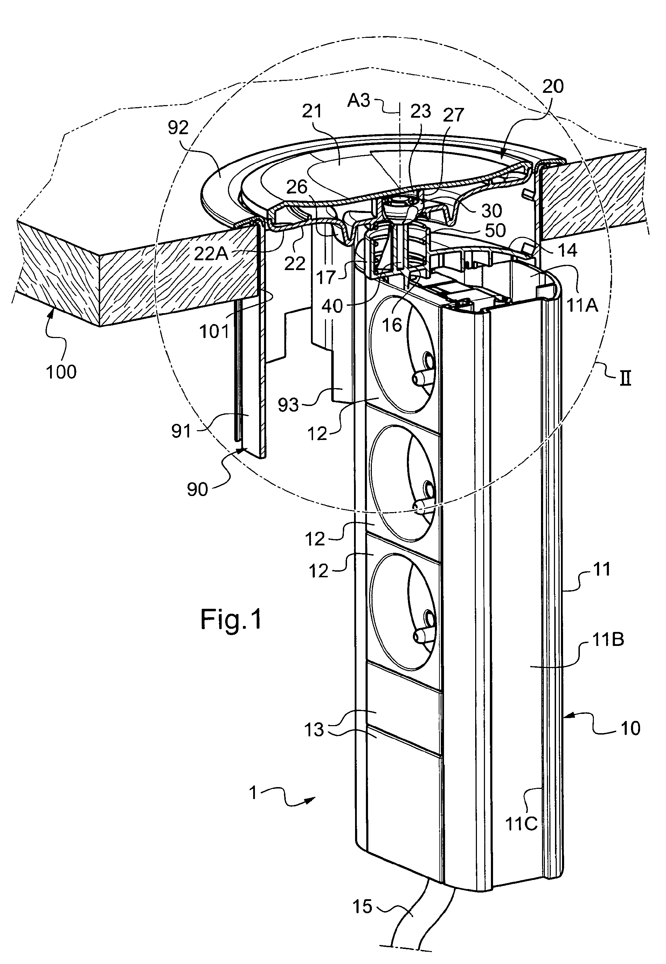

Sur la figure 1, on a représenté une paroi 100 dans laquelle est pratiquée une ouverture traversante 101.

Cette paroi 100 est positionnée horizontalement. Elle est ici formée par le plateau d'un bureau sur lequel un ordinateur portable peut être posé.

Son ouverture traversante 101 est du type de celles qu'on trouve couramment sur ces bureaux pour permettre le passage d'un câble d'alimentation électrique de l'ordinateur portable. Elle présente toutefois ici un diamètre légèrement supérieur à celui d'une ouverture classique, de l'ordre d'une dizaine de centimètres.

Cette ouverture traversante 101 accueille un guide 90 qui comporte une partie tubulaire 91 de diamètre extérieur égal, au jeu près, à celui de l'ouverture traversante 101 afin d'être engagée dans celle-ci, et une couronne 92 qui borde l'extrémité haute de la partie tubulaire 91 afin de reposer sur la face supérieure de la paroi 100, tout autour de l'ouverture traversante 101.

On a également représenté sur la figure 1 un accessoire électrique 1 monté mobile en translation dans le guide 90 selon un axe de translation A3 qui correspond en pratique à l'axe vertical de l'ouverture traversante 101.

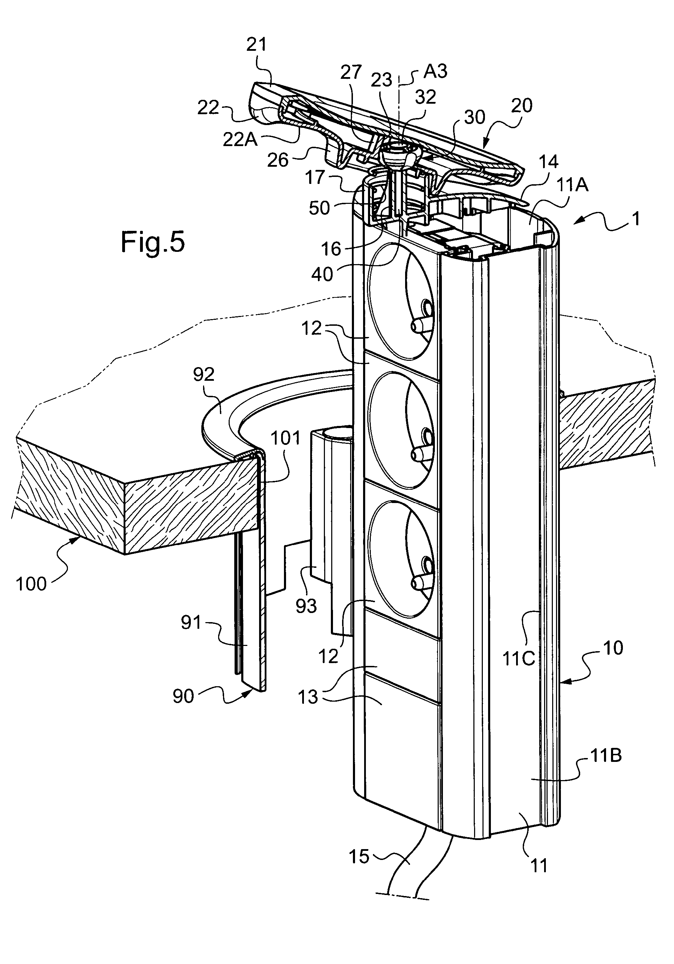

Cet accessoire électrique 1 est plus précisément monté mobile dans le guide 90 entre deux positions extrêmes, dont une position rentrée dans laquelle il est situé sous le niveau de la couronne 92 du guide 90 (figure 1), et une position sortie dans laquelle il fait saillie au-dessus de cette couronne 92 (figure 5).

Cet accessoire électrique 1 est principalement composé de deux parties principales, un corps 10 qui forme la partie fonctionnelle de l'accessoire, et un couvercle 20 qui est adapté à obturer esthétiquement l'ouverture traversante 101 lorsque l'accessoire électrique 1 est en position rentrée.

Le corps 10 de l'accessoire électrique 1 ne fait pas à proprement parler l'objet de la présente invention et il ne sera donc pas décrit en détail.

Tel que représenté sur les figures, ce corps 10 est constitué par un bloc multiprise offrant plusieurs prises de courant 12. Il pourrait en variante offrir des fonctions autres, telles que par exemple des fonctions d'interrupteur, de disjoncteur, de prise réseau (RJ45)...

Ici, comme le montre la figure 1, ce bloc multiprise 10 comporte un socle 11 profilé qui s'étend selon un axe longitudinal parallèle à l'axe de translation A3 et qui présente une section transversale globalement en forme de U, avec un fond 11A et deux ailes 11 B.

Les extrémités de ces ailes 11 B sont repliées l'une vers l'autre et comportent des rails en vis-à-vis qui permettent le montage direct des prises de courant 12 dans l'espace intérieur du socle 11.

Tel que représenté sur la figure 1, le socle 11 accueille ainsi trois prises de courant 12. Deux opercules 13 sont également montés entre ces rails pour obturer l'espace laissé libre dans l'ouverture délimitée entre les extrémités des deux ailes 11 B.

Le socle 11 est par ailleurs fermé à son extrémité basse par un embout inférieur (non visible sur les figures) par lequel fait saillie un câble d'alimentation 15 qui, d'un côté, est connecté aux prises de courant 12, et qui, de l'autre, comporte une fiche électrique à enficher dans une prise de courant murale pour alimenter les prises de courant 12.

Le socle 11 est également fermé à son extrémité haute par un embout supérieur 14, qui est esthétiquement bombé vers l'extérieur de telle sorte que sa tranche se raccorde continûment au socle 11.

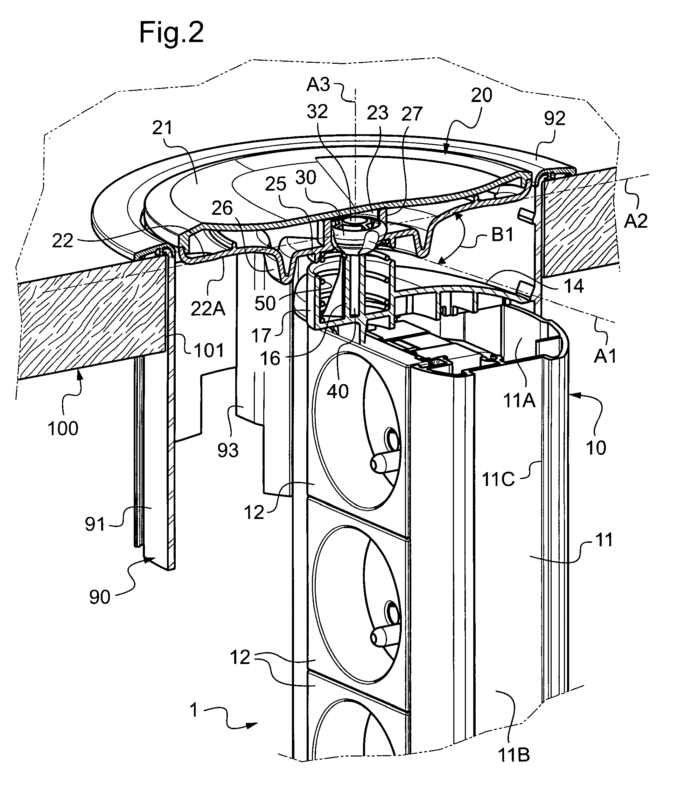

Comme le montre plus particulièrement la figure 2, le couvercle 20 présente quant à lui une forme globale de disque épais et creux, de diamètre égal, au jeu près, au diamètre intérieur de la partie tubulaire 91 du guide 90.

Le couvercle 20 est ici formé de deux parties distinctes appelées plateau avant 21 et plateau arrière 22.

Ces deux plateaux 21, 22 présentent globalement des formes de disques fins dont les bords extérieurs sont recourbés l'un vers l'autre pour s'emboîter l'un sur l'autre. Ils sont par ailleurs équipés sur leurs faces intérieures en vis-à-vis de moyens d'encliquetage complémentaires, permettant de les fixer rigidement ensemble.

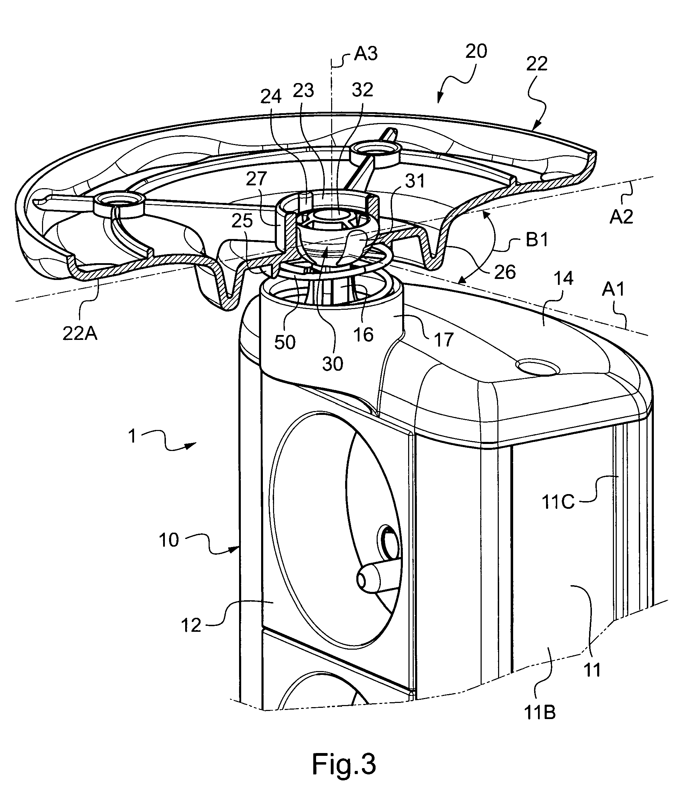

Selon une caractéristique particulièrement avantageuse de l'invention, et comme le montrent plus particulièrement les figures 2 et 3, le couvercle 20 est monté mobile à pivotement par rapport au bloc multiprise 10 autour de deux axes A1, A2 distincts, orientés selon des directions qui forment ensemble un angle B1 non nul.

Autrement formulé, le couvercle 20 est monté sur le bloc multiprise 10 de manière à présenter au moins deux mobilités de pivotement par rapport à celui-ci.

Tel que représentés sur les figures, les axes A1, A2 sont orthogonaux à l'axe de translation A3 et sont donc parallèles au plan du débouché de l'ouverture traversante 101. La combinaison des deux pivotements permet alors ici au couvercle 20 de basculer dans l'ouverture traversante 101 autour d'une infinité d'axes contenus dans ce plan.

Ici, le couvercle 20 est bloqué en rotation autour de l'axe de translation A3. On pourrait toutefois parfaitement prévoir de le laisser libre de pivoter autour de cet axe.

Comme le montrent plus particulièrement les figures 2 et 3, les pivotements du couvercle 20 par rapport au bloc multiprise 10 sont assurés par des moyens de rotule 23, 30.

Ces moyens de rotule comportent une tête de rotule 30 qui est ici fixée au bloc multiprise 10 et qui est engagée dans un logement 23 défini à l'intérieur du couvercle 20. Bien entendu, en variante, on pourrait prévoir d'intervertir les positions de la tête de rotule et du logement, en fixant la rotule au couvercle et en ménageant un logement dans le bloc multiprise 10.

Telle que représentée sur les figures 2 et 3, la tête de rotule 30 présente une forme d'hémisphère. Elle est fixée au bloc multiprise 10 de telle manière que son axe se confonde avec l'axe de translation A3 et que son sommet soit tourné vers le bloc multiprise 10.

Pour sa fixation au bloc multiprise 10, la tête de rotule 30 présente un puits axial 32 d'accueil d'une vis de fixation 40. Ce puits axial 32 présente ici un rétrécissement de section (non visible sur les figures) permettant de former une portée pour la tête de la vis de fixation 40.

La vis de fixation 40 utilisée est ici auto-taraudeuse. Sa tête est donc située dans le puits axial 32, en appui contre la portée prévue à l'intérieur de ce puits axial 32. Comme le montre la figure 2, son corps fileté est quant à lui engagé dans une cheminée 16 qui s'élève à partir de la face supérieure de l'embout supérieur 14 du bloc multiprise, suivant l'axe de translation A3.

Sur la figure 3, on observe que des nervures de rigidification sont prévues autour de cette cheminée 16 pour optimiser le maintien en position fixe de la tête de rotule 30 par rapport au bloc multiprise 10.

Le logement 23 prévu en correspondance à l'intérieur du couvercle 20 est quant à lui situé entre les faces intérieures des plateaux avant 21 et arrière 22. Il est plus précisément délimité par un berceau 27 d'accueil de la tête de rotule 30.

Ce berceau 27 est à cet effet formé, d'une part, par une partie centrale du plateau arrière 22 du couvercle 20, et, d'autre part, par une nervure tubulaire qui s'élève autour de cette partie centrale du plateau arrière 22, jusqu'à la face intérieure du plateau avant 21.

Le logement 23 délimité à l'intérieur de ce berceau 27 présente une forme complémentaire de celle de la tête de rotule 30.

Comme le montre la figure 3, le berceau 27 comporte plus précisément une face intérieure dont le fond présente une forme hémisphérique de diamètre égal au diamètre de la tête de rotule 30, et dont l'embouchure présente une forme cylindrique pour permettre au couvercle 20 de basculer autour de la tête de rotule 30.

Le berceau 27 est par ailleurs ouvert sur son fond par un orifice de passage de la vis de fixation 40, de diamètre strictement supérieur au diamètre de la cheminée 16, pour permettre au couvercle 20 de basculer sans que le bord de cet orifice de passage ne vienne buter contre la cheminée 16.

Pour bloquer la rotation du couvercle 20 par rapport au bloc multiprise 10 autour de l'axe de translation A3, la tête de rotule 30 est creusée sur sa face externe hémisphérique de quatre rainures de blocage 31 dans lesquelles sont engagées quatre nervures de blocage 24 prévues en correspondance sur la face intérieure du berceau 27.

Pour qu'elles ne bloquent pas les pivotements du couvercle 20 par rapport au bloc multiprise 10 autour des axes A1, A2, ces quatre rainures de blocage 31 et ces quatre nervures de blocage 24 s'étendent en longueur dans des plans qui contiennent l'axe de translation A3. De cette manière, les nervures de blocage 24 du berceau 27 peuvent coulisser dans les rainures de blocage 31 de la tête de rotule 30 lorsque le couvercle 20 pivote par rapport au bloc multiprise 10 autour des axes A1, A2.

Avantageusement, comme le montrent les figures 2 et 3, l'accessoire électrique 1 comporte un moyen de rappel 50 du couvercle 20 dans une position droite, dans laquelle il s'étend dans un plan orthogonal à l'axe de translation A3. Ce moyen de rappel 50 est ainsi prévu pour avoir tendance à ramener automatiquement le couvercle 20 en position droite lorsque l'utilisateur cesse d'exercer un appui sur celui-ci.

De cette manière, lorsque l'accessoire électrique 1 est en position rentrée et qu'aucun câble d'alimentation électrique n'est branché aux prises de courant 12 du bloc multiprise 10, le moyen de rappel 50 permet de ramener le couvercle 20 en position droite, de telle manière qu'il affleure la face supérieure de la paroi 100 et qu'il obture le débouché de l'ouverture traversante 101.

Ce moyen de rappel est en l'espèce formé par un ressort de compression 50 précontraint entre le bloc multiprise 10 et le couvercle 20 et centré sur l'axe de translation A3.

Ce ressort de compression 50 est plus précisément interposé entre la face supérieure de l'embout supérieur 14 du bloc multiprise 10 et la face extérieure du plateau arrière 22 du couvercle 20, autour de la cheminée 16.

Pour maintenir le ressort de compression 50 en position, la face supérieure de l'embout supérieur 14 du bloc multiprise 10 et la face extérieure du plateau arrière 22 du couvercle 20 présentent chacune une nervure annulaire 17, 25 en saillie, d'axe confondu avec l'axe de translation A3 et de diamètre intérieur égal au diamètre du ressort de compression 50.

Les extrémités du ressort de compression 50 sont engagées dans l'espace intérieur délimité par ces nervures annulaires 17, 25, autour de la cheminée 16, et sont placées en appui contre les faces intérieures de ces nervures annulaires 17, 25.

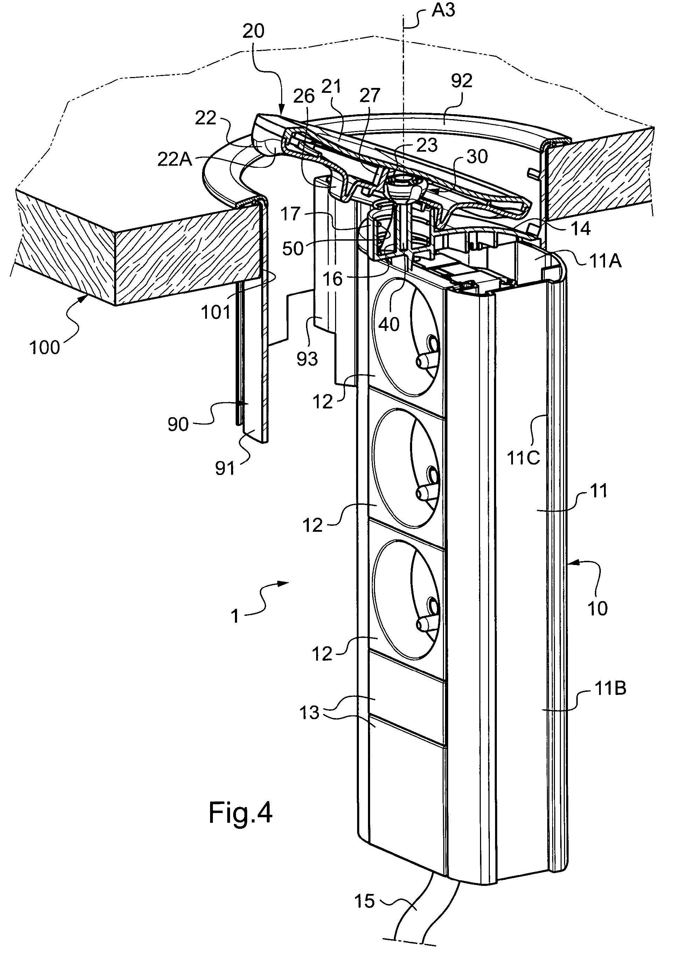

Comme le montrent les figures 3 et 4, il est prévu une butée 26 pour limiter le débattement du couvercle 20 par rapport au bloc multiprise 10 autour des axes A1, A2.

Cette butée est formée par un renflement 26 qui s'étend en saillie de la face extérieure du plateau arrière 22 du couvercle 20, suivant un contour centré sur l'axe de translation A3. Tel que représenté sur la figure 3, ce renflement 26 est plus précisément formé par un repli de la paroi du plateau arrière 22 du couvercle 20.

Ce renflement 26 présente une hauteur et une position telles qu'il vient au contact de la face extérieure de la nervure annulaire 17 prévue en saillie de l'embout supérieur 14 du bloc multiprise 10 lorsque le couvercle 20 bascule autour des axes A1, A2 d'un angle seuil, de l'ordre d'une trentaine de degrés.

Ici, comme le montre plus précisément la figure 1, le guidage en translation de l'accessoire électrique 1 dans le guide 90 intervient au niveau du socle 11 du bloc multiprise 10.

Les deux ailes 11 B du socle 11 comportent à cet effet chacune une rainure longitudinale 11C, d'axe parallèle à l'axe de translation A3 et présentant un fond plat.

La face intérieure de la partie tubulaire 91 du guide 90 porte en correspondance deux patins 93 qui sont engagés dans ces deux rainures longitudinales 11C et de part et d'autre de ces deux rainures, pour permettre au bloc multiprise 10 de coulisser par rapport au guide 90 selon l'axe de translation A3.

Ces patins 93 sont auto-freinés en ce sens qu'ils portent un revêtement adhérent sur leurs zones de contact avec les ailes 11 B du socle 11. Ainsi, lorsqu'il est placé en position sortie, l'accessoire électrique 1 reste immobile tant qu'aucun effort n'est exercé sur celui-ci pour le faire se translater vers sa position rentrée.

La partie tubulaire 91 du guide 90 comporte par ailleurs des moyens de butée pour limiter le débattement du bloc multiprise 10 par rapport au guide 90 afin d'éviter que l'accessoire électrique 1 ne sorte du guide 90.

Ces moyens de butée ne sont pas représentés sur les figures.

Typiquement, on pourrait prévoir qu'ils se présentent sous la forme de nervures prévues en saillie des patins 93 du guide 90 et en saillie du socle 11 du bloc multiprise 10 pour venir en butée les unes contre les autres lorsque l'accessoire électrique 1 arrive en position rentrée ou sortie.

De telles nervures présenteraient alors préférentiellement des profils en triangles rectangles, avec une face en pente pour autoriser le montage en force de l'accessoire électrique 1 dans le guide 90, et une face droite pour bloquer tout démontage intempestif de l'accessoire électrique 1.

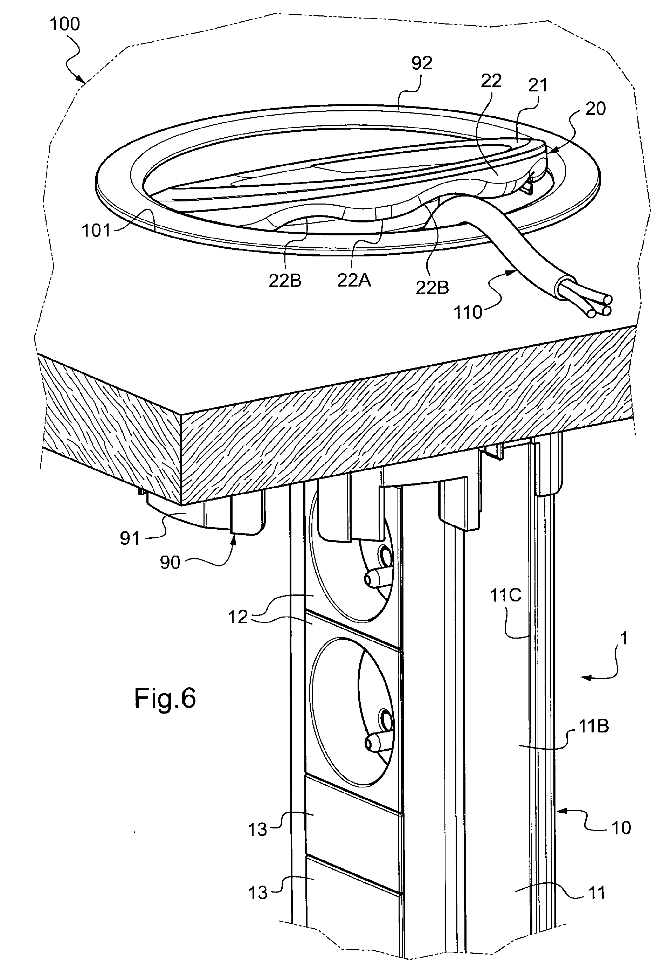

Comme le montre la figure 6, lorsque la fiche du câble d'alimentation électrique 110 de l'ordinateur portable est enfichée dans l'une des prises de courant 12 du bloc multiprise 10 et que l'accessoire électrique 1 est en position rentrée, le ressort de compression 50 ramène naturellement le couvercle 20 en appui contre ce câble d'alimentation électrique 110.

L'orientation de l'axe autour duquel le couvercle 20 est incliné s'adapte alors en fonction de la position du câble d'alimentation électrique 110, ce qui réduit les contraintes appliquées par le couvercle 20 sur le câble.

Pour réduire encore ces contraintes, il est prévu, à la jonction entre la tranche du couvercle 20 et la face extérieure 22A du plateau arrière 22 du couvercle 20, des renfoncements 22B en creux.

Comme cela apparaît sur les figures 3 et 5, ces renfoncements 22B sont plus précisément formés en creux dans le seul plateau arrière 22 du couvercle 20, de manière qu'ils ne modifient pas l'aspect extérieur du couvercle 20 lorsque celui-ci est en position d'obturation de l'ouverture traversante 101 de la paroi 100.

Ces renfoncements 22B présentent des formes identiques et sont régulièrement espacés sur la tranche du couvercle 20.

Chaque renfoncement 22B forme plus précisément sur la tranche du couvercle 20 une arche pour le passage du câble d'alimentation électrique 110. Cette arche se prolonge bien sûr en longueur vers le centre du couvercle 20 afin de laisser au câble le dégagement nécessaire pour qu'il se courbe en direction des prises de courant 12 du bloc multiprise 10.

Ainsi, les renfoncements 22B forment ensemble une sorte d'ondulation le long de la tranche du couvercle 20.

Par conséquent, quelle que soit l'orientation du câble d'alimentation électrique 110 à sa sortie de l'ouverture traversante 101, celui-ci s'engage naturellement sous l'un de ces renfoncements 22B lorsque le couvercle 20 se rabat sur lui. L'effort exercé sur le câble se répartit donc mieux sur la périphérie de ce câble, ce qui évite qu'il ne soit pincé localement.

Le montage du couvercle 20 sur le bloc multiprise 10 se déroule de la manière suivante (voir la figure 3).

La tête de rotule 30, équipée de la vis de fixation 40, est tout d'abord engagée dans le berceau 27 du plateau arrière 22 du couvercle 20, de telle manière que le corps fileté de la vis de fixation 40 fasse saillie hors du couvercle 20 par l'orifice prévu au centre du berceau 27.

Le ressort de compression 50 est quant à lui engagé autour de la cheminée 16 prévue en saillie de l'embout supérieur 14 du bloc multiprise 10, de telle manière que sa première extrémité s'engage et se bloque dans l'espace intérieur délimité par la nervure annulaire 17 prévue en saillie de ce même embout supérieur 14.

Le plateau arrière 22 du couvercle 20 est alors ramené en regard de cet embout supérieur 14 du bloc multiprise 10, puis la vis de fixation 40 est vissée dans la cheminée 16, ce qui permet de fixer rigidement la tête de rotule 30 par rapport au bloc multiprise 10 sans pour autant bloquer les mobilités de pivotement du couvercle 20 sur la tête de rotule 30.

Lors de cette opération, la seconde extrémité du ressort de compression 50 s'engage et se bloque dans l'espace intérieur délimité par la nervure annulaire 25 prévue en saillie de la face extérieure du plateau arrière 22 du couvercle 20.

Le plateau avant 21 du couvercle 20 est alors encliqueté sur le plateau arrière 22 pour fermer le logement 23 de la tête de rotule 30.

L'accessoire électrique 1 ainsi assemblé est alors prêt à être engagé, par le haut ou par le bas de la paroi 100, dans l'ouverture traversante 101 de la paroi 100, sur les patins 93 portés par la partie tubulaire 91 du guide 90.

Une fois l'accessoire électrique installé dans le guide 90, il se présente à l'utilisateur dans la position représentée sur la figure 1, c'est-à-dire en position rentrée et avec son couvercle en position droite.

Pour avoir accès aux prises de courant 12 du bloc multiprise 10, l'utilisateur exerce un appui sur une zone quelconque de la périphérie du couvercle 20, ce qui a pour effet de faire basculer ce dernier en position inclinée (voir figure 4).

L'utilisateur peut alors saisir fermement le couvercle 20 par sa tranche et exercer une traction sur ce dernier afin d'extraire le bloc multiprises 10 en position sortie (voir figure 5).

Lorsqu'il est relâché, le couvercle 20 est rappelé en position droite par le ressort de compression 50. Le bloc multiprise 10 reste en revanche en position sortie grâce au revêtement adhérent placé sur les patins 93 du guide 90.

L'utilisateur peut alors facilement brancher le câble d'alimentation électrique de son ordinateur portable à l'une des prises de courant 12 du bloc multiprise 10.

Une fois cette opération effectuée, il exerce un effort de pression sur le couvercle 20 pour faire coulisser le bloc multiprise 10 en position rentrée. Dans cette position, comme le montre la figure 6, le câble d'alimentation électrique de l'ordinateur portable s'engage naturellement sous l'un des renfoncements 22B du couvercle 20.

Le bloc multiprise 10 est ainsi à nouveau caché sous la paroi 100, de manière parfaitement esthétique.

La présente invention n'est nullement limitée au mode de réalisation décrit et représenté, mais l'homme du métier saura y apporter toute variante conforme à son esprit.

En particulier, on pourrait prévoir de positionner l'accessoire électrique dans une paroi autre que celle d'une table de bureau. Il pourrait par exemple être positionné dans une cloison murale ou dans un sol, ou encore dans un plan de travail d'une cuisine.

On pourrait également prévoir de rigidifier le maintien du guide dans la paroi, par exemple à l'aide d'un écrou vissé sur un filetage prévu en correspondance sur la face externe de la partie tubulaire du guide.

On pourrait aussi prévoir de supprimer le moyen de rappel de l'accessoire électrique, auquel cas l'utilisateur serait contraint de repositionner manuellement le couvercle après chaque manipulation.

On pourrait par ailleurs prévoir de monter le couvercle à pivotement sur le bloc multiprise autour de deux axes non perpendiculaires à l'axe de translation. On pourrait par exemple prévoir d'équiper le bloc multiprise de deux pivots distincts, dont un premier pivot monté sur le bloc multiprise suivant l'axe de translation, et un second pivot monté sur le premier pivot suivant un axe perpendiculaire à l'axe de translation, et qui supporte le couvercle.

On pourrait en variante prévoir que le couvercle présente un diamètre moindre que celui de l'ouverture traversante, pour permettre le passage de conducteurs électriques fins entre la tranche du couvercle et le guide. Dans cette variante, le montage à basculement du couvercle par rapport au bloc multiprise autour de deux axes distincts permettrait ici encore de faciliter l'ouverture du couvercle.

Encore en variante, on pourrait prévoir que l'accessoire électrique soit équipé de moyens d'éjection automatique, permettant de faciliter son extraction depuis sa position rentrée jusqu'à sa position sortie. De tels moyens d'éjection automatique, fonctionnant par exemple à gaz, sont déjà connus et ne seront pas ici décrits plus en détail.

## Revendications

1. Accessoire électrique (1) adapté à être monté mobile en translation dans une ouverture traversante (101) d'une paroi (100) entre une position rentrée et une position sortie, et comprenant :
- un corps (10), et
- un couvercle (20) adapté à obturer au moins en partie ladite ouverture traversante (101) lorsque l'accessoire électrique (1) est placé en position rentrée, et qui est monté mobile à pivotement par rapport au corps (10) autour d'un premier axe (A1),
**caractérisé en ce que** le couvercle (20) est monté mobile à pivotement par rapport au corps (10) autour d'un second axe (A2) dont la direction forme un angle (B1) non nul avec la direction dudit premier axe (A1).

2. Accessoire électrique (1) selon la revendication précédente, dans lequel ledit premier axe (A1) et ledit second axe (A2) sont orthogonaux à l'axe de translation (A3) dudit accessoire électrique (1).

3. Accessoire électrique (1) selon l'une des revendications précédentes, dans lequel le couvercle (20) est bloqué en rotation suivant un axe de rotation passant par ladite ouverture traversante (101) et parallèle à l'axe de translation (A3) dudit accessoire électrique (1).

4. Accessoire électrique (1) selon l'une des revendications précédentes, dans lequel il est prévu des moyens de rotule (23, 30) qui interviennent entre le corps (10) et le couvercle (20) pour assurer les pivotements du couvercle (20) par rapport au corps (10) autour dudit premier axe (A1) et dudit second axe (A2).

5. Accessoire électrique (1) selon la revendication précédente, dans lequel le couvercle (20) comporte deux parties (21, 22) distinctes qui définissent ensemble un logement (23) recevant une tête de rotule (30) fixée audit corps (10).

6. Accessoire électrique (1) selon la revendication précédente, dans lequel ladite tête de rotule (30) présente une forme de demi-sphère dont le sommet est orienté à l'opposé dudit couvercle (20), et ledit logement (23) présente une forme complémentaire.

7. Accessoire électrique (1) selon les revendications 3 et 6, dans lequel ladite tête de rotule (30) et ledit logement (23) comportent une nervure de blocage (24) et une rainure complémentaire (31) qui coopèrent ensemble pour bloquer la rotation du couvercle (20) par rapport au corps (10) autour dudit axe de rotation.

8. Accessoire électrique (1) selon l'une des revendications 6 et 7, dans lequel ladite tête de rotule (30) comporte un puits d'accueil (32) d'un élément d'accouplement (40) agencé pour fixer ladite tête de rotule (30) sur une extrémité dudit corps (10).

9. Accessoire électrique (1) selon l'une des revendications précédentes, **caractérisé en ce qu'**il comporte au moins un moyen de rappel (50) du couvercle (20) dans un plan orthogonal à l'axe de translation (A3) dudit accessoire électrique (1).

10. Accessoire électrique (1) selon la revendication précédente, dans lequel ledit moyen de rappel est un ressort (50) qui intervient entre le corps (10) et le couvercle (20).

11. Accessoire électrique (1) selon l'une des revendications précédentes, dans lequel ledit couvercle (20) présente des dimensions égales, au jeu près, aux dimensions de la section de ladite ouverture (101).

12. Accessoire électrique (1) selon l'une des revendications précédentes, dans lequel le couvercle (20) présente une face arrière (22A) tournée vers ledit corps (10) qui comporte un renfoncement (22B) en creux, adjacent au bord périphérique du couvercle (20), pour le passage d'un conducteur électrique (110).

13. Accessoire électrique (1) selon la revendication précédente, dans lequel ledit renfoncement (22B) s'étend en hauteur, localement, sur une partie seulement de l'épaisseur du couvercle (20).

14. Accessoire électrique (1) selon l'une des revendications 12 et 13, dans lequel ledit couvercle (20) comprend une pluralité de renfoncements (22B) de formes identiques, qui sont régulièrement espacés le long du bord périphérique du couvercle (20).
